# EUROPEAN PATENT APPLICATION

(11) **EP 1 583 312 A1**
(43) Date of publication of application: **05.10.2005**
(21) Application number: 04290891.3
(22) Date of filing: 02.04.2004
(51) Int. Cl.: H04L 29/06, H04L 12/28, H04L 12/56

(54) **Apparatuses and method for controlling access to an IP multimedia system from an application server**

(71) Applicant: FRANCE TELECOM, 75015 Paris (FR)
(72) Inventor: Dekeyzer, Dimitri, 02860 Bruyère et Mt (FR); Baruch, Deborah, 92240 Malakoff (FR)
(74) Representative: DeVile, Jonathan Mark

(57) **Abstract**

A security node (SN) controls access to an internet protocol multi-media system IMS (1) from an application server (12) outside the system. The multi-media system includes a session protocol server S-CSCF (4) and a subscriber database HSS (2). The security node comprises a database access control node operable to control access to the subscriber database HSS from the application server, a session message control node operable to control communication of the messages to the session protocol server from the application server, and a control information database for storing control data. The control data specifies conditions for accessing the subscriber database HSS and for communicating with the session protocol server S-CSCF. The database access control node is operable to control access to the subscriber database in accordance with the control data, and the session message control node is operable to control communication of messages to the session protocol server in accordance with the control data.

Embodiments of the present invention can provide a facility for an application server operating externally to an internet protocol multi-media system IMS network to have controlled access to resources within the IMS network. For example, the access may be controlled in accordance with a policy agreed between an operator of the IMS network and an operator of the application server.

## Description

### Field of the Invention

The present invention relates to security nodes for controlling access to internet protocol multi-media systems from application servers outside the systems.

### Background of the Invention

The third generation partnership project known as 3GPP has developed and standardised an Internet Protocol Multimedia Sub-system (IMS) to provide a multi-media and call control service architecture. The service architecture may be supported by a real-time capable Universal Mobile Telecommunications System (UMTS) communicating data in the form of Internet Protocol (IP) packets. IMS provides a basis for service provision and development of new services and is envisioned as a standardised convergence platform, which enables integration of real time multi-media services with non-real time services and person-to-machine communications. The IMS architecture includes application servers for hosting application programs for providing service logic and handling service execution to deliver services to users. Generally, there are three types of application servers (AS) defined in the 3GPP IMS specification. These are: the SIP Application Server, the OSA (Open Service Architecture) Application Server and the CAMEL (Customised Applications for Mobile Networks Enhanced Logic) Application Server also referred to as CAMEL Service Environment. More information on IMS can be found in [1] and [2].

In order for application servers to deliver services to IMS subscribers, a number of interfaces have been defined between the application servers and IMS entities. Examples of these interfaces include the ISC interface and the Sh interface, which are explained in more detail in Annex 1.

Application programs can be developed by an operator of the IMS (or a trusted third party) or application programs can be developed by a non-trusted third party. In order for an application program to be provided by a non-trusted third party, an application server outside the IMS must be provided with access to the IMS. Allowing access to the IMS network by a third party service provider can enhance an IMS network, because an operator of the network can offer a broader range of services. However some restriction upon the access to the IMS should be provided in order to maintain the security of the IMS network resources. It is therefore desirable to provide secure access to the IMS network resources from an application server outside an IMS network.

In the 3GPP specification, an Open Service Architecture (OSA) has been introduced as a standardised way for a third party to securely access an IMS network. OSA is a service development and execution architecture, which enables service providers to make use of an IMS network through an open standardised interface, which is referred to as the OSA API (OSA Application Programming Interface). The concept behind the OSA API is to open the operator's network resources to third parties in a secure way. However, in terms of service capabilities, the use of the OSA in an IMS domain can result in certain limitations when developing application programs. For example, OSA provides only a limited access to information contained in SIP messages and codecs for media sessions are predefined and therefore restricted to a set number of codec types. This may result in a limitation of the functions that an OSA application can offer. In addition, there are many ways to trigger a SIP application server while a range of triggering options for an OSA AS is limited due to triggering events being set in the OSA specifications. For instance, an OSA AS cannot be triggered on the media content contained in a SIP message.

Generally, it is desirable to provide access to network resources, such as resources provided by an IMS network, from an application server operating outside the network.

### Summary of Invention

According to the present invention there is provided a security node for controlling access to an internet protocol multi-media system (IMS) from an application server outside the system. The internet protocol multi-media system includes a session protocol server (S-CSCF) and a subscriber database (HSS). The security node comprises a database access control node operable to control access to the subscriber database (HSS) from the application server, a session message control node operable to control communication of the messages to the session protocol server from the application server, and a control information database for storing control data. The control data specifies conditions for accessing the subscriber database (HSS) and for communicating with the session protocol server (S-CSCF). The database access control node is operable to control access to the subscriber database in accordance with the control data, and the session message control node is operable to control communication of messages to the session protocol server in accordance with the control data.

Embodiments of the present invention can provide a facility for an application server operating externally to an internet protocol multi-media system (IMS) to have controlled access to resources within the IMS system. The access may be controlled in accordance with a policy agreed between an operator of the IMS network and an operator of the external application server. For example, the application server may have controlled access to the subscriber database (HSS) of the IMS network. The application server may be hosting application programs, which have been developed by third parties, to provide a multi-media service to subscribers. By allowing access to the information in the subscriber database, the service provided by the application programs can be adapted to characteristics of an individual user, so that services can be provided which could not otherwise be provided. For example, the subscriber database may include an indication of a location of the user, services for which the user has subscribed, a current Internet Protocol (IP) address of the user or whether the user is in an active state and ready to send or receive IP packets. As a result the application server may, for example, push information to a particular user, the content of the information being selected in accordance with the location of the user. However, as will be explained, an advantage provided by embodiments of the invention is that access to the subscriber information database is controlled in accordance with a policy agreed with third parties developing applications programs (access control information) and may also depend upon agreement with the users (user preference information).

As mentioned above, although the Open Service Architecture (OSA) can provide secure access to the IMS networks only a limited access to information contained in session (SIP) messages is provided, and codecs for use in a multi-media session are predefined and restricted to a set number of codecs types. Functions offered by the OSA are therefore limited. Furthermore, there is only a limited number of triggering possibilities for an OSA application server, because triggering events are defined in the OSA specifications, which, for example, do not include triggering on the media content contained in a SIP message. As a result of utilising a security node according to an embodiment of the present invention, SIP application servers can be used which can offer more functionality than an OSA application server to developers. Furthermore, a mapping between OSA functions and SIP functions have not yet been achieved for OSA to be used with IMS. However, SIP application servers are already available.

A security node embodying the present invention allows controlled access by an external application server to an IMS network which at least in part models access which is provided to an application server operating within the IMS network. As a result, for example, an application program providing a multi-media service can communicate messages with a session protocol server as if the application program were running on an operator's application server within the IMS network. The security node therefore adds value in that the same application program could be host on an external third party server as could be hosted on an application server located within the IMS trusted domain.

If a security node were not to be used and an external third party application server were to be allowed free access to the IMS network, the external application server would have access to all the resources of the IMS network without any control or restriction on that access. As a result a third party could have access to information which may be commercially sensitive to the operator of the IMS network, and access to data which may be personal to a user. Furthermore, an unscrupulous third party could disrupt the IMS network by sending spam messages or sending messages to an extent that a substantial portion of a communications bandwidth of the IMS network may be consumed.

The control data may include access control information defining a policy established by an operator of the network for at least one of allowing access to the subscriber database (HSS) information from the application server or for allowing communication of the messages to the session protocol server from the application server.

The control data may include user preference information providing user defined preferences for allowing access to the subscriber information database. The database access control node may be operable to control access to the subscriber database in accordance with the user preference information. As such a subscriber is provided with a facility for specifying whether information in the subscriber information database may be accessed by third parties and if so what information may be accessed.

The database access control node may control access to the subscriber database in accordance with the access control information in combination with user preference information provided within the subscriber information database.

In some embodiments the security node includes a resource controller operable to provide an indication of currently available communications resources for accessing the subscriber database and communicating messages to the session protocol server. The database access control node is operable to control access to the subscriber database (HSS), and the session message control node is operable to control communication of the messages to the session protocol server in accordance with a currently available communications resources and the policy control information.

Various further aspects and features of the present invention are defined in the appended claims.

### Brief Description of the Drawings

Embodiments of the present invention will now be described by way of example only with reference to the accompanying drawings, where like parts are provided with corresponding reference numerals, and in which:
Figure 1 is a schematic block diagram providing a simplified representation of an Internet Protocol Multi-media Sub-system (IMS) network and a SIP application server, in which the SIP application server is outside the operator's IMS network and is provided with access to the network via a security node;
Figure 2 is a schematic block diagram of the IMS and the SIP application server shown in Figure 1, including process steps illustrating an example access to the IMS from the external SIP application server;
Figure 3 is a schematic block diagram showing a more detailed implementation of the security node appearing in Figures 1 and 2;
Figure 4 is a call flow diagram illustrating the operation of the security node allowing access to an S-CSCF from an external SIP application server;
Figure 5 is a call flow diagram illustrating the operation of the security node allowing access to HSS information from an external SIP application server, for example where there is no user preference data held in a control information database of the security node;
Figure 6 is a call flow diagram illustrating the operation of the security node allowing access to HSS information from an external SIP application server, for an example where there is user preference data held in a control information database of the security node, which does not need updating;
Figure 7 is a call flow diagram illustrating the operation of the security node allowing access to an HSS from an external SIP application server, for the case where there is user preference data held in a control information database of the security node and this data needs to be updated;
Figure 8 is schematic block diagram of parts of an Internet Protocol Mulit-media Sub-system (IMS); and
Figure 9 is a schematic block diagram of a Security Gateway (SEG) as determined in accordance with the 3GPP specifications.

### Description of Example Embodiments

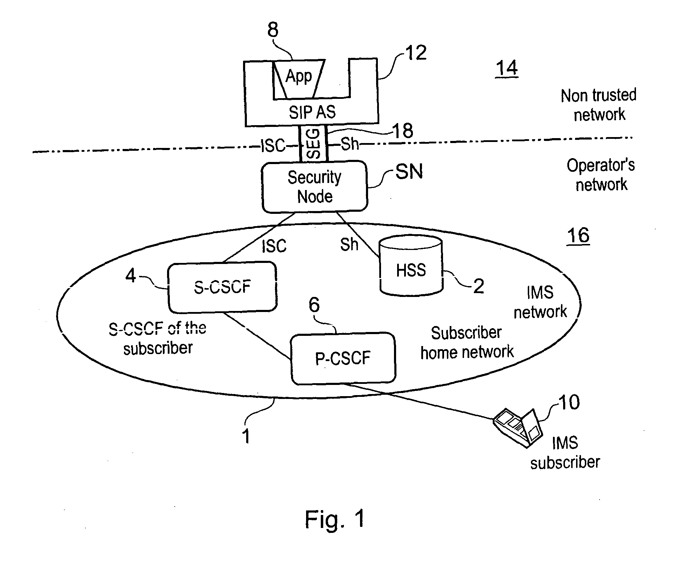

Figure 1 provides an illustration of an example of an IMS architecture according to an embodiment of the present invention. In Figure 1 an IMS network 1 includes a subscriber database which is a Home Subscriber Server (HSS) 2, a session protocol server, which is a Serving Call State Control Function (S-CSCF) 4 and a Proxy-Call State Control Function (P-CSCF) 6, which are arranged in combination with an application program 8 to provide a multi-media service to an IMS subscriber 10. The service is provided by the application program 8 operating on a Session Initiation Protocol (SIP) Application Server (AS) 12, which is operating in a non-trusted network 14, outside an operator's network 16. In order to provide the service to the IMS subscriber 10, the SIP AS 12 requires access to the IMS network 1. Access to the IMS network 1 from the SIP AS is provided by a security node SN. The security node SN provides two interfaces to the IMS subsystem, which are the standard ISC interface to the S-CSCF and the Sh interface to the HSS. The operation of the security node is substantially transparent or at least unobtrusive to the operation of the third party SIP AS 12, the HSS 2 and the S-CSCF 4.

As will be appreciated by those acquainted with UMTS and IMS, for clarity, the UMTS core network elements have not been shown in Figure 1 and not all of the IMS entities are represented in Figure 1. However, the P-CSCF 6, the S-CSCF 4 and the HSS 2 of the IMS network are shown in Figure 1, since these are required for supporting a service to the IMS subscriber 10. The network shown in Figure 1 also includes a security gateway (SEG) channel 18, which provides a facility for communicating between the SIP AS and the IMS system. More details of the SEG are provided in Annex 2.

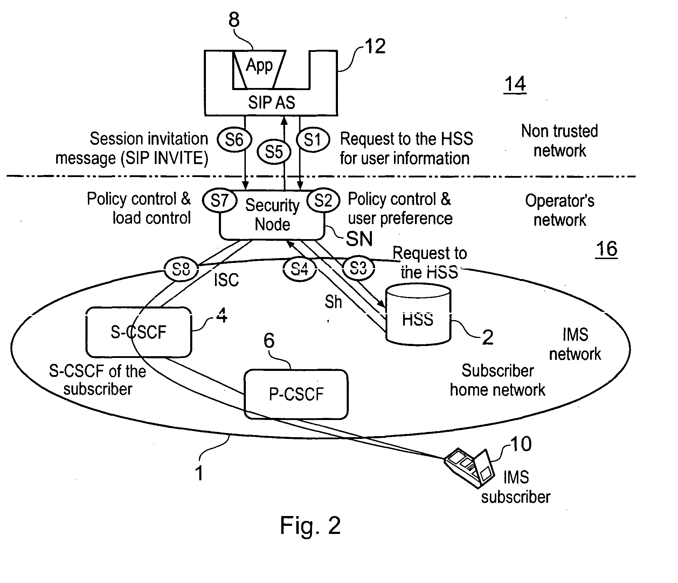

A description of the operation of the security node SN will now be provided with reference to Figure 2. Figure 2 provides an illustration of the IMS network shown in Figure 1 with reference numerals to illustrate for example process steps, which occur when the application program 8 executes service logic to provide a service to the IMS subscriber 10. For the example illustrated in Figure 2, the applications program 8 hosted on the third party SIP AS 12 is arranged to establish a multimedia session with an IMS subscriber. This example provides an illustration of how the security node SN allows access to different types of communication between the SIP AS 12 and the IMS network via both the ISC and Sh interfaces. The example also illustrates a process of policy control and access restriction determined by user preferences. For the example illustrated in Figure 2, it is assumed that:
- the IMS subscriber 10 has been registered with the IMS subsystem 1. Therefore, a specific S-CSCF 4 has been assigned to serve the IMS subscriber 10.
- The IMS subscriber 10 has set up data sharing preferences with the SIP AS 12, which are referred to as user preferences.
- The operator and the third-party domain hosting the SIP AS 12 have agreed on a set of policy rules for accessing the IMS network from the third party SIP AS 12, which are referred to as access control information.

A first series of process steps summarised below (S1 to S4) provide an illustration of an operation for retrieving information from the subscriber database (HSS):
S1: The application program 8 on the SIP AS 12 initiates a multimedia session with the IMS subscriber 10, according to the 3GPP specification. Accordingly, in step S1, the SIP AS 12 first needs to retrieve the address of the subscriber's session protocol server (S-CSCF) 4, if not known already. In this example, the SIP AS 12 does not yet know the S-CSCF address. As the HSS 2 contains the name of the S-CSCF 4 where a multimedia public identity is registered, the third party SIP AS 12 needs to interrogate the HSS for this information. Using an Sh procedure, the application program 8 sends a request to the operator's IMS network using a secure connection and a Security Gateway (SEG), not represented in Figure 2 (although shown in Figure 1 as the SEG 18). The security node receives the request and processes it.
S2: The security node SN receives the request for access to the HSS and examines the request with respect to either predefined access control information or a predefined set of user preferences or both. For example, the security node SN may check:
   - If the SIP AS 12 is authorised to perform an Sh request in accordance with policy control and other off-line agreements specified by the access control information (part of the control data held in the control information database).
   - If the subscriber 10 has authorised the SIP AS 12 to access the name of the S-CSCF to which the subscriber 10 is attached as defined in the user preference information (part of the control data held in the control information database).
   - If there are enough resources at the HSS to perform the query.
S3: If the security node SN determines that the request from the application program 8 is allowed, then the reviewed request for the address of the S-CSCF is passed to the HSS via the Sh interface, the security node SN generating the corresponding request to retrieve from the HSS the information requested by the Application Server.
S4: In response to the received request, the HSS retrieves the requested information, and communicates the information via the Sh interface to the security node SN.
S5: The requested information is then returned to the third party SIP AS.
   For an example of access to the session protocol server S-CSCF 4, the operation steps S6 to S10 shown in Figure 2 are provided to illustrate an initiation of a multimedia session using an exchange of SIP commands.
S6: The media session with the IMS subscriber 10 is initiated when the SIP AS sends a SIP INVITE message to the IMS home network of the subscriber. Again it uses a secure connection and a Security Gateway channel (SEG) 18, not represented in Figure 2.
S7: The SIP message is received by the security node SN. The security node checks if the SIP AS is authorised to the send this request, by for example reviewing a predefined policy and/or other agreements which have been established with the third party providing the service as part of the access control information. Depending on the results of reviewing the predefined policy and/or agreements the security node accepts or rejects the request.
S8: If the interaction is accepted, the security node forwards the SIP INVITE to the S-CSCF 4 via the ISC interface. Access to the S-CSCF 4 according to a conventional exchange of signalling messages can then proceed.

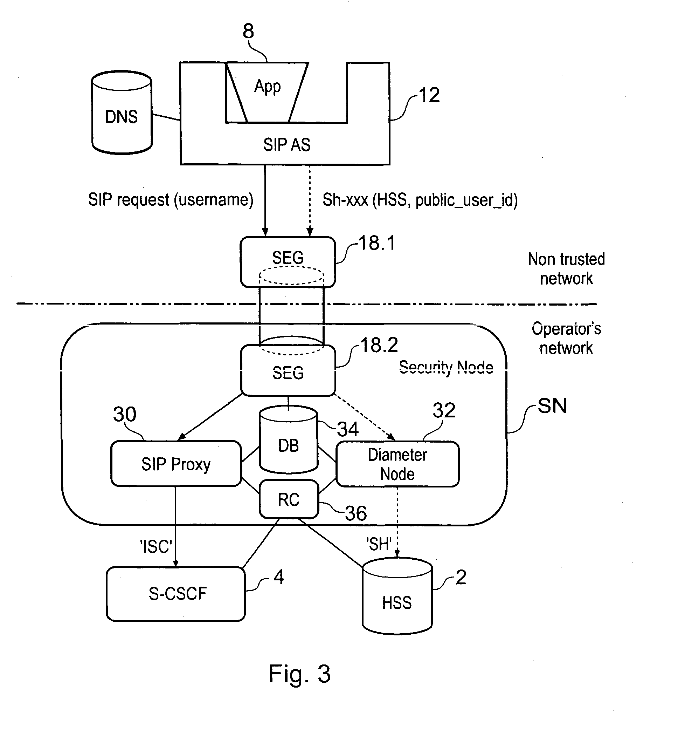

A more detailed example implementation of the security node SN is provided in Figure 3. Parts shown in Figure 3, which have corresponding parts, which appear in Figures 1 and 2, are provided with the same numerical references. As shown in Figure 3, the security node SN comprises a SIP proxy 30, a DIAMETER node 32, a control information database 34, a resource controller 36 and a security gateway 18.2. The operation of each of these parts will be described in the following sections:

### SIP Proxy

The SIP proxy 30 is an example implementation of a session message control node, which is arranged to enforce a defined policy for allowing access to the ISC interface as determined by the access control information. The policy may be established by off-line agreements with the application program developer. The agreements may define, for example, conditions for allowing permission to an external SIP AS to access the ISC interface for SIP procedures. The list of permissions may include at least one of a permission to act as a user agent (UA), a permission to use SUBSCRIBE/NOTIFY methods, or a determination of a maximum number of simultaneous communications allowed between the application server and the session protocol server, which may be SIP connections.

### DIAMETER Node

The DIAMETER Node 32 is an example implementation of a database access control node, which provides a facility for allowing inter-domain access to the Sh interface. As explained in Annex 1, DIAMETER is a protocol providing authentication, authorisation and accounting for accessing the subscriber database (HSS). The DIAMETER node 32 is responsible for enforcing an established operator's policy for accessing the Sh interface, including a Service Level Agreement (SLA) (see control information database). The operator's policy may be established, according to off-line agreements between the operator and the service provider. An off-line agreement may, for example, specify permissions for a third party SIP AS for Sh interface procedures or the maximum number of simultaneous connections, which may be allowed on the Sh interface. The policy is represented by the access control information stored in the control information database 34 within the security node. The list of subscriber database permissions may include at least one of a permission to perform an Sh-pull procedure, a permission to perform an Sh-update procedure, a permission to perform a Sh-Subs-Notif procedure. The permissions may also include a determination of a maximum number of simultaneous communications allowed between the application server and the subscriber database.

The DIAMETER Node 32 does not behave as a DIAMETER Proxy. The DIAMETER node links the external Sh interface with the intra-domain Sh interface. The DIAMETER node queries the HSS on behalf of the external SIP AS but does not proxy any Sh request sent by the non-trusted AS. As a result, the DIAMETER node maintains a mapping between the Sh-procedures performed on the external Sh interface and the Sh procedures performed on the internal Sh interface.

The DIAMETER Node 32 is responsible for enforcing permission for external SIP Application servers only. The HSS 2 will still maintain a SIP AS permission list for the operator's SIP AS as part of the access control information. In order for the DIAMETER node 32 to be able to query the HSS on behalf of an external SIP AS, the address of the DIAMETER node 32 has to be included in the SIP AS permission list of the HSS. As the DIAMETER node is part of the operator's domain, there is no security issue with this requirement. A second requirement is that the DIAMETER node should be given all Sh permissions to be able to have full access to the information contained in the HSS and to be able to perform if required any operation.

The DIAMETER node 32 is also arranged to enforce access to user data in accordance with a user defined preference information. User preferences provide a facility for an IMS subscriber to determine conditions for authorising a third party application server to access a user's personal data such as public user identities, location and status, which are held in the HSS. One example of an implementation could consist in storing the user preferences in the HSS as transparent data and having the DIAMETER node download the preference data whenever the preferences are required. To download the user preferences from the HSS the DIAMETER node can use the Sh-Pull procedure. Consistency between the information stored temporarily at the DIAMETER node and the information held in the HSS is checked before any enforcement of the user preferences. In some examples, a timer can be set in the DIAMETER node to purge user preferences that have not been used for sometime.

### Control Information Database

The control information database 34 is used to store control data which includes the access control information which provides Service Level Agreement (SLA) information between the operator and the SIP Application Server. An SLA is an off-line agreement defined between the operator and the third party which authorises the application program provider to access certain resources. The SLA information enables a central management of the SIP AS related data such as an external SIP AS permission list both for the ISC and the Sh interfaces or the maximum number of simultaneous connections allowed on the ISC and Sh interfaces. The control information database 34 provides a facility for storing the access control information representing the SLA information as well as the user preference information which also forms part of the control data.

### Security Gateway (SEG)

A part of the security gateway (SEG) 18.2 formed within the security node SN provides one end of a channel for communicating securely between the IMS network 16 and the non-trusted network 14. The SEG 18 has been defined in the 3GPP specifications and provides a facility for inter-domain security for the IP layer and the transport layer. The SEG therefore provides a channel for any IP-based traffic between the SIP AS and the Security Node (incl. DIAMETER and SIP traffic). A more detailed explanation of the SEG is provided in Annex 2.

### Resource Controller (RC)

The role of the resource controller 36 is to poll and analyse measurements of the load of the S-CSCF and the HSS in order to prevent overloading of IMS resources. The resource controller 36 is arrange to adapt dynamically external communications in accordance with a currently experienced load on either the S-CSCF or the HSS, in accordance with the access control information which includes an off-line agreement signed between the third party and the operator.

### Call Flows

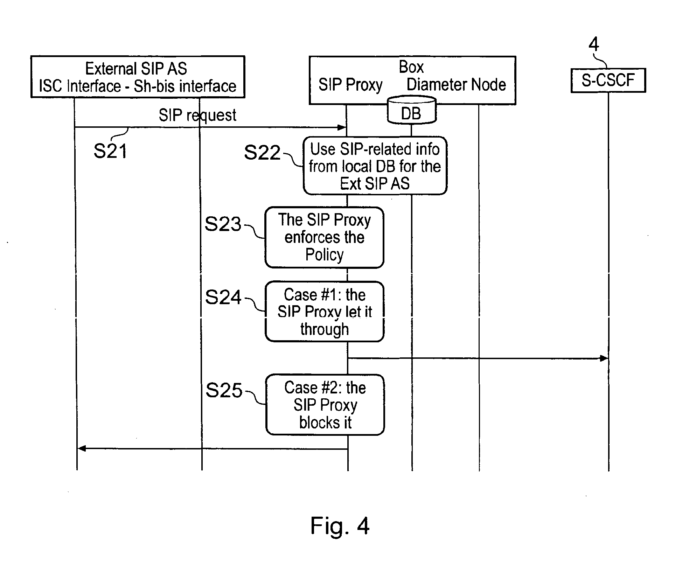

To illustrate the operation of the security node in providing controlled access to the IMS network from a non-trusted network, three example call flows will be provided which include access to the HSS information via the DIAMETER node and access to the SCSC-F via the SIP proxy 30. When receiving a request from a third party SIP AS, the security node is arranged to analyse the received request and to determine whether the request is a SIP request or a DIAMETER request. In accordance with the analysis the security node either communicates a message to the S-CSCF or access the HSS in dependence upon the determination. Figures 4, 5, 6 and 7 provide examples of an access to the S-CSCF from a SIP AS and an access to the HSS information respectively for example cases.

Figure 4 provides a flow diagram for accessing the session protocol server (S-CSCF) via the session message control node (SIP Proxy) 30, which is summarised below:
S21: The third party SIP AS sends a SIP request to the operator's home network using the inter-domain ISC interface. The SIP request from the third party SIP AS is received by the SIP proxy 30, within the security node SN and processed by the SIP proxy 30.
S22: The SIP proxy 30 uses the SIP related information forming part of the access control information held in the control information database 34 to control the rights of the third party SIP AS to access the S-CSCF 4.
S24: The SIP proxy 30 enforces the rights to access the S-CSCF 4 in accordance with the access control information held in the control database 34, providing a policy established by the user. If the policy control indicates that the request is valid, the SIP proxy 30 will allow the request to go through to the S-CSCF 4.
S25: If the request is not valid, the request is blocked by the SIP Proxy 30 and an error message is returned to the third party SIP AS.

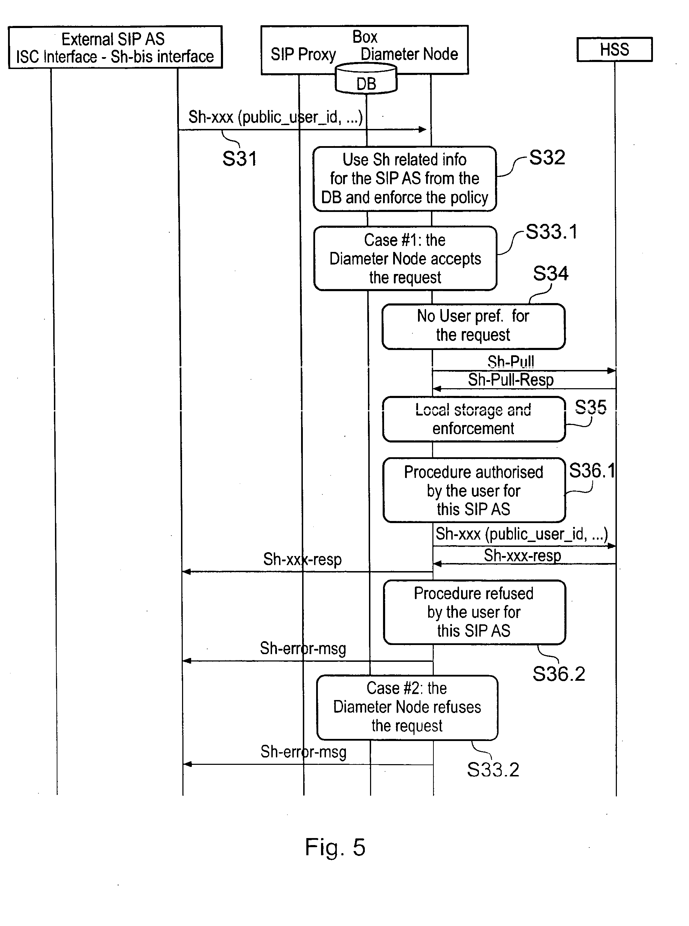

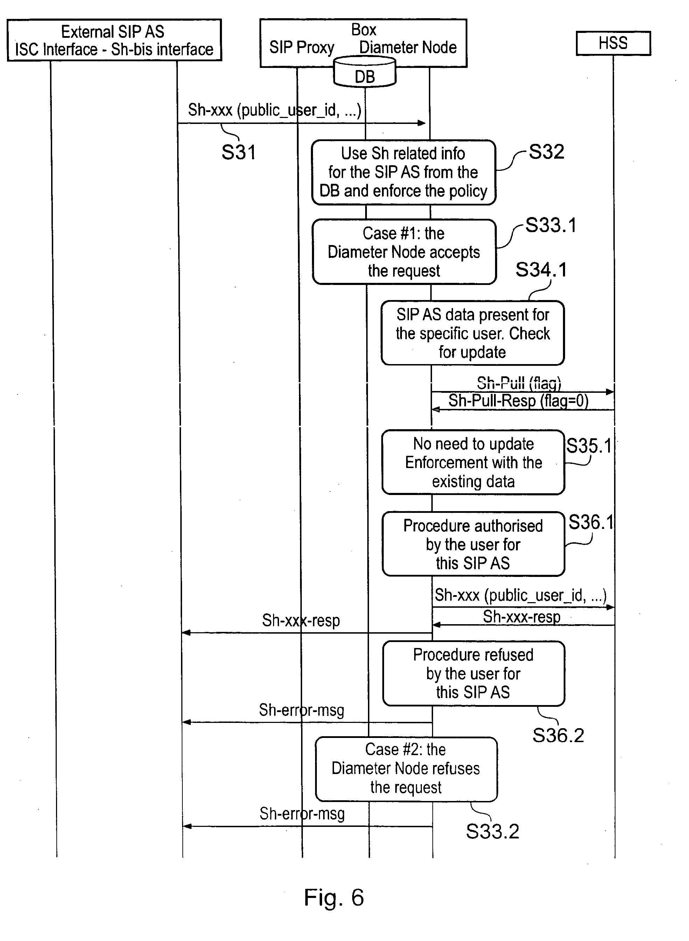

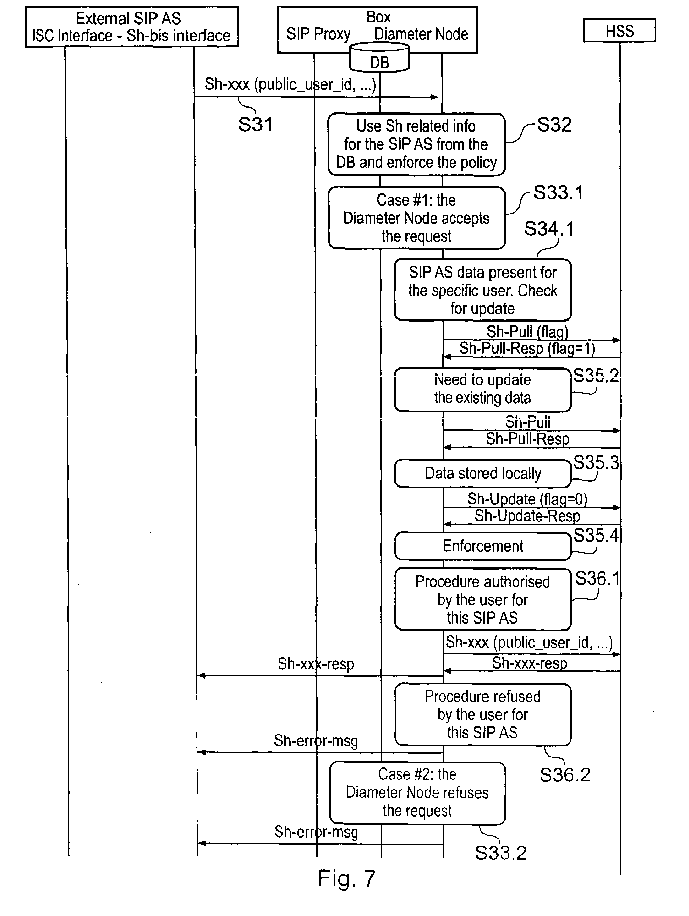

As already explained, any incoming request addressed to the HSS is processed by the DIAMETER node. Three different cases can be distinguished when handling requests for the user information held in the HSS, which depend on whether user preference data is present in the control database 34. Figure 5 provides a flow diagram illustrating access to the HSS in accordance with a DIAMETER request from a third party SIP AS, for the case where there are no user preferences at the DIAMETER node. Figures 6 and 7 provide flow diagrams illustrating the case where there are user preferences present at the DIAMETER node, which either do not need updating (Figure 6) or need up-dating (Figure 7) respectively.

The first case is when the user preferences regarding access to personal information are not available at the DIAMETER node. For instance, after a certain period of time, the user preferences can be considered obsolete and deleted from the DIAMETER node. The call flow for such a situation is presented in Figure 5 and is summarised as follows:
S31: The third party SIP AS sends a request addressed to the HSS using the external Sh interface, which is received by the DIAMETER Node.
S32: The DIAMETER Node first checks if some operator's policy has been defined for the considered SIP AS, by querying the control information database 34 on the SIP AS address for the access control information.
S33: If an operator's policy has been defined, the DIAMETER node enforces this policy and either accepts the request (S33.1) or refuses the request by sending an error message to the SIP AS (S33.2).
S33.1: If the Diameter Node has accepted the request, the node then proceeds to determine whether there is user preference information present in the control information database. Note that each Sh-procedure contains the public user id which is required by the SIP AS.
S34: Assuming for the present example that the user preferences are not locally stored, since the user preferences are stored in the HSS, the DIAMETER node queries the HSS on the public user id using the Sh-pull procedure to retrieve the user preference information.
S35: The DIAMETER node retrieves the user preferences, stores them locally in the control information database, and checks if the user authorises the SIP AS to retrieve the requested data.
S36.1: If the DIAMETER Node accepts the request, taking into consideration the user preferences, it will query the database on the SIP AS's behalf and then reply to the initial Sh-request from the external SIP AS with the requested information.
S36.2: Otherwise the DIAMETER Node does not query the HSS and rejects the initial request by sending back a error message to the SIP AS, thereby enforcing the policy defined in the access control information.

The second case is when the DIAMETER node already holds the data related to the preferences of the user in the control information database. For this example, there are two alternatives depending upon whether or not the locally stored user preferences are still consistent with the data held in the HSS. As the user preferences are stored in the HSS, the DIAMETER Node first has to make sure the local version of the user preferences is still consistent with the data in the HSS. To achieve this, each time the DIAMETER node receives an Sh request related to a specific user, it has to check a flag in the repository data of the HSS to determine whether or not the data has been updated or not. Figure 6 provides a flow diagram illustrating the case where the user preferences are still consistent with those stored in the HSS, whereas Figure 7 illustrates the case where the user preferences are no longer consistent and have to be updated. The flow diagrams in Figures 6 and 7 perform the same operation as the flow diagram provided in Figure 5, except that the user preference information is not present in the Figure 5 example. Therefore, only the differences for the example cases will be explained for the flow diagrams in Figures 6 and 7. As such, the following steps differ from the steps performed in Figure 5:
S34.1: The user preference information corresponding to the SIP AS data are present in the control information database.
S35.1 (Figure 6): If the user preferences have not changed, then the DIAMETER node can use the local version of the user preference to check whether or not the request is accepted or refused in combination with the policy provided by the access control information which has already been determined in step S32.
S35.2 (Figure 7): Otherwise, if the local version of the user preferences have become obsolete, then the DIAMETER Node has to download the user preferences from the HSS again using the Sh-Pull procedure and then an appropriate flag is updated using the Sh-update procedure.
S35.3 (Figure 7): The user preference data retrieved from the HSS is then stored locally within the control information database 34.
S35.4 (Figure 7): The user preferences are then enforced by the DIAMETER node to control access to the HSS.

Various modifications may be made to the embodiments of the invention herein before described without departing from the scope of the present invention. For example, the present invention should not be considered to be limited to an IMS network but may find application in controlling access to any multi-media system from an application server.

Various further aspects and features of the present invention are defined in the appended claims.

### Annex 1: IP Multimedia Subsystem

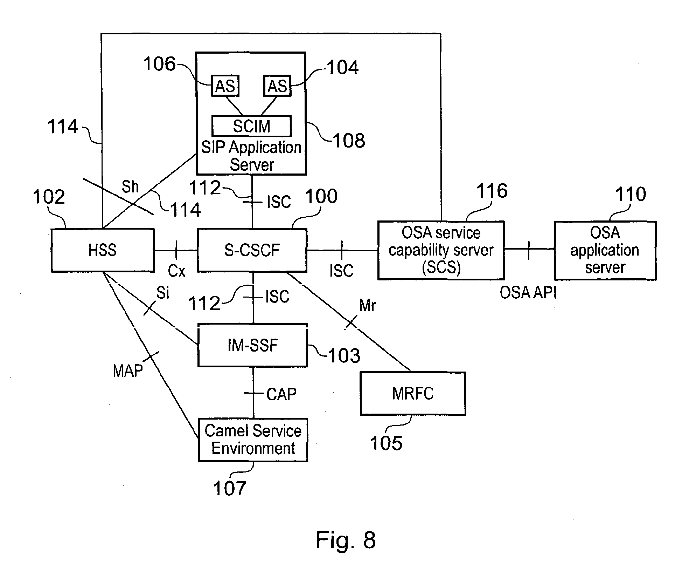

The IP Multimedia Subsystem (IMS) is a multi-media and call control service architecture, defined by 3GPP, on top of the real time capable UMTS packet domain. IMS provides a basis for service provision and development of new services. Its role is to provide services to the user. More information on the IMS can be found in [1] and [2]. IMS architecture for service provision is provided in Figure 8.

### IMS entities

The IMS home network is responsible for making IMS services available to the user and for controlling and managing the access to these services. An IMS home network can be split into four main functional entities: the Interrogating Call Session Control Function (I-CSCF), the Serving Call Session Control Function (S-CSCF), the Proxy Call Session Control Function (P-CSCF) and the Home Subscriber Server (HSS). However, for simplicity in this brief explanation only the Serving Call Control Function (S-CSCF) 100 and the Home Subscriber Server (HSS) 102 are shown in Figure 8. Other elements such as the IP Multimedia-Service Switching Function (IM-SSF) 103, the Multimedia Resource Function Control (MRFC) 105 and the CAMEL (Customized Applications for Mobile Networks Enhanced Logic) Service Environment 107 will not be discussed in this Annex, but more explanation of these functions can be found in [1] and [2].

### The Serving Call Control Function (S-CSCF)

The Serving Call Control Function (S-CSCF) 100 is in charge of various signalling functions. In the context of this invention, the role of the S-CSCF 100 of particular interest is its service triggering features. Indeed, in IMS, the S-CSCF is the entity, which performs service triggering. It can provide simple services to a user or more advanced services by interacting with an application server.

### The Home Subscriber Server (HSS)

The Home Subscriber Server (HSS) 102 is an evolution of the Home Location Register (HLR) currently used in the mobile network. It contains information such as user identities, subscribed service or profile, service specific information, mobility management information, authorisation information and functions related to the IP multimedia domain. It handles authentication and location information.

### IMS Application Servers

Application servers are in charge of hosting service logic and handling service execution. There are three types of Application Servers (AS) defined in IMS specifications to deliver services to the user: the SIP Application Server 108, the OSA (Open Service Architecture) Application Server 110 and the CAMEL Service environment 107.

In order for Application Servers to deliver services to IMS subscribers, a number of interfaces have been defined between the Application Servers and IMS entities, as shown in Figure 8. The main interfaces include the ISC Interface 112 and the Sh interface 114, which are explained in more detail below.

### Sh interface

The interface between the HSS 102 and the SIP AS 108 or the OSA SCS 110 is called the Sh interface 114. The Sh interface is an **intra operator interface** and is based on the DIAMETER protocol. DIAMETER is an Authentication, Authorisation, Accounting (AAA) protocol used to exchange information related to user profile.

The Sh interface 114 provides a facility for performing data handling procedures such as downloading data from the HSS 102 to the AS 108 and updating data in the HSS 102. The Sh interface 114 also handles subscription/notification procedures which enables the HSS to notify an Application Server of changes in data for which the AS previously subscribed to. More information on the Sh interface can be found in [3] and [4].

### ISC interface

In IMS specifications, the application servers, running the services, have been de-coupled from other network equipment and communicate with IMS through a standard interface. The interface between the S-CSCF 100 and the service platform(s) is called the ISC interface 112. The ISC interface is a standardised SIP-based interface. More information on the ISC interface 112 can be found at [1]-6.2 and [2]-4.2.4. This ISC Interface is common to the SIP Application Server, the OSA Application Server and the CAMEL Application Server.

### The IP Multimedia- Service Switching Function (IM-SSF):

The IM-SSF performs mediation between the S-CSCF and the CAMEL Application Protocol (CAP). Indeed, it provides the inter-working of the SIP messages to the corresponding Customized Applications for Mobile Networks Enhanced Logic (CAMEL). In addition, Call State models are logically located within the IM-SSF which performs the mapping process between SIP methods passed across the ISC and CAMEL mechanisms, that will be used to initiate dialogue with the CAMEL service environment.

### The Multimedia Resource Function Control (MRFC):

In IMS, the Multimedia Resource Function (MRF) (not shown in figure 8) takes care of performing all the necessary functions in order to be able to carry out multiparty calls and audio video conferences on the IP network. The MRF is divided from a functional point of view in two parts: the Multimedia Resource Function Control (MRFC) and the Multimedia Resource Function Processor (MRFP). The MRFC controls the media streams in the MRFP, interprets the information that arrives from the S-CSCF or from an application server and performs the control of the users belonging to different audio-video conferences. The MRFP provides the resources that must be controlled by the MRFC, mixes and processes the media streams and interacts with the MRFC in order to update the list of active users in the transmission of real time data.

### Annex 2: Secure Access Mechanisms for Third Party SIP AS

SIP Application Servers in IMS are described in the 3GPP specifications as a way to influence and to control SIP sessions. A range of service capabilities offered by SIP Application Servers and the Session Initiation Protocol (SIP) provide an attractive environment for third party service providers and other network operators, including fixed line and Internet service providers to develop multi-media services. Furthermore, the standardisation of the application server interface with the S-CSCF eases the opening of the IMS domain to third party SIP AS. As a result, security mechanisms between IMS entities and third party SIP AS should be set up. A number of security mechanisms are already available in IMS and can be used for this purpose.

### Authentication Mechanisms

Access control and validity of the user are security functions that are achieved by authentication mechanisms, preventing a user's identity from being usurped or more generally spoofed. There are two main authentication mechanisms that can be used with SIP: the Transport Layer Security Protocol (TLS) and IPSec. Note that IPSec and TLS also provide confidentiality and integrity.

### Security on the ISC interface

According to 3GPP specifications [2], "the IMS control plane traffic within the IMS core network shall be routed via a SEG when it takes place between different security domains (in particular over those interfaces that may exist between different IMS operator domains). In order to do so, IMS operators shall operate NDS/IP Za-interface between SEGs."

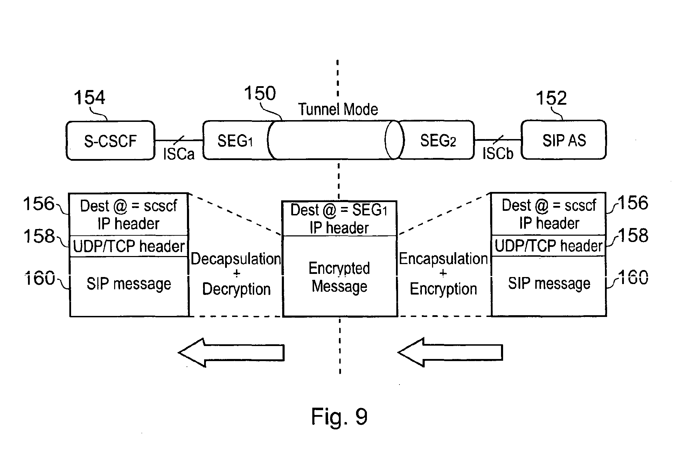

In other words, a mechanism has been defined to handle situations where the ISC interface handles communications between two different domains. The defined architecture to handle such situations, the NDS/IP architecture, is based on a hop-by-hop security mechanism and entities referred to as **Security Gateways** (SEGs). The role of SEGs is to manage communications with entities situated in other security domains. An overview of the general procedure is provided in Figure 9. In Figure 9 a SEG channel 150 is provided between a SIP Application Server 152 and an S-CSCF 154. As illustrated a SIP message containing an Internet Protocol header 156, a UDP/TCP header 158 and a SIP message body 160 is encapsulated and encrypted for communication to the S-CSCF via the SEG channel 150. Decryption and de-encapsulation are performed to recover the SIP message at a receiving side of the channel 150.

### The HSS permission list

Although the Sh interface is defined by 3GPP has an intra operator interface, it is interesting to notice that the HSS maintains a permission list called "AS permission list" (The permissions are applied by the HSS to a specific Application Server but are not user-specific). When the HSS receives a request from an AS, the HSS checks if the considered AS has the permission to send the considered request and return an error result if the AS does not have the required permission.

### References

[1] TS 23.218: IP Multimedia Subsystem (IMS); IMS Call Model -Stage 2 (Release 5)
[2] TS 23.228: IP Multimedia Subsystem (IMS); Stage 2 (Release 5)
[3] 3GPP - TS 29.328 - IMS Sh interface - Signalling flow and message content (Release 5)
[4] 3GPP - TS 29.329 - Sh interface based on the Diameter protocol - Protocol details (Release 5)
[5] IETF RFC 3588 - Diameter Protocol - September 2003
[6] IETF RFC 2246 - Transport Layer Security (TLS) version 1.0 - January 1999
[7] IETF RFC 3546 - TLS Extensions - June 2003

## Claims

1. A security node for controlling access to an internet protocol multi-media system (IMS) from an application server outside the system, the multi-media system including a session protocol server (S-CSCF) and a subscriber database (HSS), the security node comprising
a database access control node operable to control access to the subscriber database (HSS) from the application server,
a session message control node operable to control communication of the messages to the session protocol server from the application server, and
a control information database operable to store control data specifying conditions for accessing the subscriber database (HSS) and for communicating with the session protocol server (S-CSCF), wherein the database access control node is operable to control access to the subscriber database in accordance with the control data, and the session message control node is operable to control communication of messages to the session protocol server in accordance with the control data.

2. A security node as claimed in Claim 1, wherein the control data stored in the control information database includes access control information, the access control information defining a policy established by an operator of the multi-media system for at least one of allowing access to the subscriber database (HSS) from the application server and for allowing communication of the messages to the session protocol server from the application server.

3. A security node as claimed in Claim 2, wherein the access control information includes a list of session protocol server permissions for controlling the communication of messages from the application server to the session protocol server.

4. A security node as claimed in Claim 2 or 3, wherein the access control information includes a list of subscriber database permissions for controlling the communication of commands from the application server to the subscriber database.

5. A security node as claimed in any preceding Claim, wherein the control data includes user preference information providing user defined preferences for allowing access to the subscriber information database, the database access control node being operable to control access to the subscriber database in accordance with the user preference information.

6. A security node as claimed in Claim 5, wherein the user preference information is retrieved from the subscriber database and stored in the control information database.

7. A security node as claimed in Claim 6, wherein the database access control node is operable to retrieve the user preference information and store the information in the control information database in response to one of the user preference information being absent from the control information database or the user preference information being considered inconsistent with the information in the subscriber database.

8. A security node according to any preceding claim, comprising a resource controller, the resource controller being operable to monitor a load on the session protocol server and the subscriber database, and to control access dynamically to at least one of the session protocol server and the subscriber database in accordance with the monitored load.

9. A security node as claimed in any preceding claim, wherein the session message control node comprises a Session Initiation Protocol (SIP) proxy.

10. A security node as claimed in Claim 9, wherein the session message control node communicates with the session protocol server via an ISC interface.

11. A security node as claimed in any preceding claim, wherein the database access control node communicates with the subscriber database via an Sh interface.

12. A communications network comprising an internet protocol multi-media system (IMS) and an application server outside the system, the multi-media system including a session protocol server (S-CSCF) and a subscriber database (HSS), the communications network including
a security gateway channel (SEG) operable to communicate data between the application server and the multi-media system, the data including at least one of commands for accessing the subscriber database and messages for communicating to the session protocol server from the application server, and
a security node for controlling access to the multi-media system from the application server, the security node including
a database access control node operable to receive the commands for accessing the subscriber database from the security gateway channel and to control access to the subscriber database (HSS) by the application server,
a session message control node operable to receive the messages for the session protocol server (S-CSCF) from the security gateway channel and to control communication of the messages to the session protocol server, and
a control information database operable to store control data specifying conditions for accessing the subscriber database (HSS) and for communicating with the session protocol server (S-CSCF), wherein the database access control node is operable to control access to the subscriber database in accordance with the control data, and the session message control node is operable to control communication of messages to the session protocol server in accordance with the control data.

13. A communications network as claimed in Claim 12, wherein the control data stored in the control information database includes access control information, the access control information defining a policy established by an operator of the network for at least one of allowing access to the subscriber database (HSS) from the application server and for allowing communication of the messages to the session protocol server from the application server.

14. A communications network as claimed in Claim 12 or 13, wherein the control data includes user preference information providing user defined preferences for allowing access to the subscriber information database, the database access control node being operable to control access to the subscriber database in accordance with the user preference information.

15. A method of controlling access to an internet protocol multi-media system (IMS) from an application server outside the system, the multi-media system including a session protocol server (S-CSCF) and a subscriber database (HSS), the method comprising
controlling, using a database access control node, access of the subscriber database (HSS) by the application server,
controlling, using a session message control node, communication of the messages to the session protocol server from the application server,
storing control data in a control information database, the control data specifying conditions for accessing the subscriber database (HSS) and for communicating with the session protocol server (S-CSCF), wherein the controlling access to the subscriber database includes controlling access in accordance with the control data, and the controlling communication of messages to the session protocol server from the application server includes controlling communication in accordance with the control data.

16. A computer program which when installed on a data processing apparatus, causes the data processing apparatus to perform a method of controlling access to an internet protocol multi-media system (IMS) from an application server outside the system, the multi-media system including a session protocol server (S-CSCF) and a subscriber database (HSS), the method comprising
controlling, using a database access control node, access of the subscriber database (HSS) by the application server,
controlling, using a session message control node, communication of the messages to the session protocol server from the application server,
storing control data in a control information database, the control data specifying conditions for accessing the subscriber database (HSS) and for communicating with the session protocol server (S-CSCF), wherein the controlling access to the subscriber database includes controlling access in accordance with the control data, and the controlling communication of messages to the session protocol server includes controlling communication in accordance with the control data.

17. A computer program product including a readable medium having recorded thereon the computer program as claimed in Claim 16.

18. A medium bearing signals representative of the computer programaccording to Claim 16.
